# EUROPEAN PATENT APPLICATION

(11) **EP 2 374 658 A1**
(43) Date of publication of application: **12.10.2011**
(21) Application number: 10425114.5
(22) Date of filing: 09.04.2010
(51) Int. Cl.: B60P 1/34

(54) **Equipment for collecting refuse.**

(71) Applicant: Industria Napoletana Compattatori Oleodinamici S.r.l., 80023 Caivano (NA) (IT)
(72) Inventor: Merlo, Giuseppe, 12023 Caraglio (Cueno) (IT)
(74) Representative: Marchitelli, Mauro

(57) **Abstract**

Equipment for collecting refuse, comprising a false frame (12), a tank (14) articulated to the false frame (12) and at least one lifting cylinder (32) designed to govern a movement of the tank (14) between a loading position and an unloading position, wherein the tank (14) is articulated to the false frame (12) by means of an articulation mechanism (16) comprising a first articulated quadrilateral (38) and a second articulated quadrilateral (40), wherein the first articulated quadrilateral (38) comprises a first arm (42) and a second arm (44), which are articulated to the false frame (12) about a first shaft (46) and a second shaft (48), respectively, the second articulated quadrilateral (40) comprises a third arm (50) and a fourth arm (52), which are articulated to the tank (14) about a third shaft (54) and a fourth shaft (56), respectively, wherein the third arm (50) is articulated to the second arm (44) and to the first arm (42) about a fifth shaft (58) and a sixth shaft (60), respectively, and wherein the fourth arm (52) is articulated to the second arm (44) about a seventh shaft (62).

## Description

### Field of the invention

The present invention relates to equipment for collecting refuse.

More precisely, the invention regards equipment of the tank type for collecting urban refuse.

### Description of the prior art

Tank-type equipment are means of low internal volume, normally 6 to 8 m³, mounted on cab chassis of small dimensions normally having a total weight on the ground of not more than 7500 kg, in many cases without a device for compacting refuse.

Traditional tank-type equipment for collecting refuse comprises: a false frame, a tank, and possibly a bin-tipping device. The false frame set in the bottom part of the equipment enables anchorage to the frame of the cab chassis. In the rear part of the false frame, a structure, normally referred to as tower, generally made up of tubular elements, supports two hinges on which the tank for containing refuse is pivoted.

The containment tank can be equipped in the top part with a compacting device that enables displacement of the mass of refuse, introduced by means of the bin-tipping device or else manually, from the rear part to the front part and enables also a slight compacting to be carried out. The containment tank is hinged to the tower of the false frame, and during dumping is turned by means of hydraulic cylinders.

Equipment of small dimensions with the above characteristics fill in a short time, and it proves necessary, in order to optimize the service of refuse collection, to be able to unload them into large-sized vehicles that operate in the vicinity instead of sending them for unloading to the rubbish dump or to centres for refuse collection. In this way, it is possible to carry out a number of loads in a single work shift, eliminating the dead times for transfer by road from the area of collection to the rubbish dump.

To carry out unloading into a compactor of larger dimensions, it is necessary for the edge of the tank to turn at a greater height than that of the loading side of the receiving vehicle. The majority of compactors with the function of receiving vehicle has the loading side set at approximately 1400 mm from the ground.

For this reason, the axis of rotation of the tank, set in the terminal part of the tower, is very high from the ground. This characteristic is useful for carrying out unloading into large-sized compactors but penalizes the operations of manual loading.

The current trend to carry out differentiated refuse collection leads to carrying out the service of refuse collection manually. The operators have to throw the bags beyond the loading edge of the perimetral sides of the tank. Alternatively, the operators have to put the refuse collected into a bin attached to the bin-tipping device and then operate the device to unload the bin into the loading mouth. This second method helps the operator but lengthens a great deal the time for refuse collection.

During manual loading, the operators have to throw the material collected into the tank, throwing it over the rear wall or the side walls in the case of tank without compacting device.

In tanks without compacting device, there may be present side hatches for lowering the edge for introducing refuse in order to facilitate loading thereof. The presence of the hatch helps the operator only in the first part of loading. When the refuse contained in the tank reaches the threshold of the hatch, it is necessary to raise the hatch; from this point onwards, the loading edge returns to being the maximum one.

In tanks with compacting device it is not possible to provide the side hatches because the compacting device would cause exit of the material loaded through the hatches.

In the case of tanks with compacting device, the attempt is made to lower the rear edge by setting small openable walls on the loading edge. The presence of the hinges for rotation of the tank renders it, however, impossible to obtain openable walls of acceptable dimensions on the loading edge. The presence of the hinges for rotation of the tank limits the size of the openable walls to a value lower than 150 mm. Even envisaging an openable wall of these dimensions, the loading edge remains in any case at a height greater than 1850 mm from the ground.

In the known solutions, there is moreover the difficulty of accessing the mouth of the receiving compactor when a bin-tipping device is present.

### Object and summary of the invention

The object of the present invention is to provide equipment for collecting refuse that will enable the problems of the known art to be overcome.

According to the present invention, said object is achieved by equipment for collecting refuse having the characteristics forming the subject of Claim 1.

The claims form an integral part of the teaching provided herein in relation to the invention.

### Brief description of the drawings

The present invention will now be described in detail with reference to the attached drawings, which are provided purely by way of non-limiting example and in which:
- Figure 1 is a side view of equipment for collecting refuse according to the present invention;
- Figure 2 is a side view illustrating the equipment of Figure 1 with the loading side open;
- Figure 3 is an enlarged detail illustrating the articulation mechanism designated by the arrow III in Figure 1;
- Figure 4 is a side view of equipment according to the invention mounted on a vehicle; and
- Figures 5 and 6 are side views illustrating the equipment according to the invention during the unloading operation.

### Description of embodiments of the invention

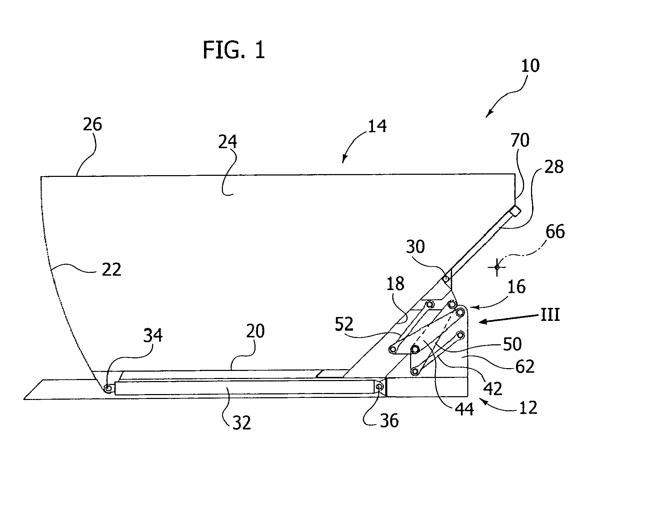

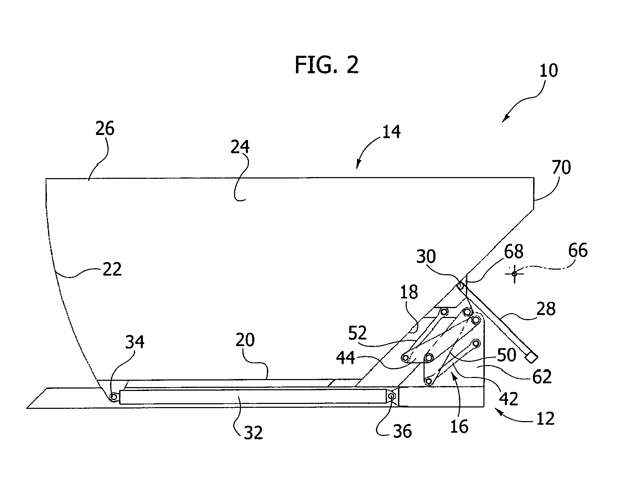

With reference to Figures 1 and 2, designated by 10 is equipment according to the present invention. The equipment 10 comprises a false frame 12 and a tank 14. The tank 14 is articulated to the false frame 12 by means of an articulation mechanism 16 that will be described in detail in what follows.

The tank 14 has a rear wall 18, a bottom wall 20, a front wall 22, two side walls 24, and an open top edge 26. The tank 14 has an openable side 28 articulated to the rear wall 18 about a horizontal transverse shaft 30. Figures 1 and 2 illustrate the tank 14 with the openable side 28 in the closed position and in the open position, respectively.

A lifting cylinder 32 is set between the bottom wall 20 of the tank 14 and the false frame 12. A front end 34 of the lifting cylinder 32 is articulated to the tank 14, and a rear end 36 of the lifting cylinder 32 is articulated to the false frame 12.

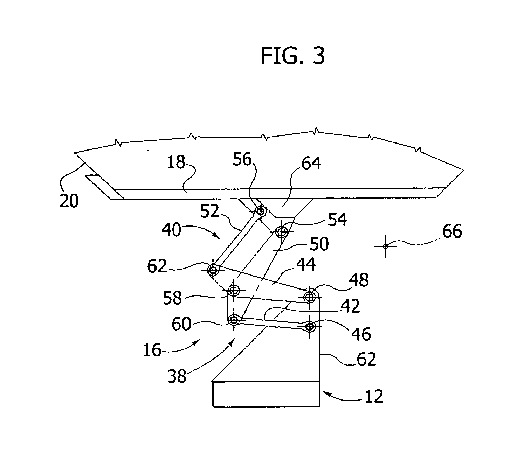

With reference to Figure 3, the articulation mechanism 16 comprises a first articulated-quadrilateral device 38 and a second articulated-quadrilateral device 40.

The first articulated-quadrilateral device 38 comprises a first arm 42 and a second arm 44, which are articulated to the false frame 12 about a first shaft 46 and a second shaft 48, respectively. The second articulated-quadrilateral device 40 comprises a third arm 50 and a fourth arm 52, which are articulated to the tank 14 about a third shaft 54 and a fourth shaft 56, respectively.

The third arm 50 is articulated to the second arm 44 about a fifth shaft 58 and to the first arm 42 about a sixth shaft 60. The fourth arm 52 is articulated to the second arm 44 about a seventh shaft 62.

The shafts 46, 48, 54, 56, 58, 60, 62 are all parallel to one another and horizontal.

In the embodiment illustrated, the shafts 46 and 48 are carried by a triangular bracket 62 of the false frame 12, and the shafts 54, 56 are carried by a support 64 fixed to the rear wall 18 of the tank 14. Said arrangement is not, however, imperative.

In the example illustrated in the figures, the distance between the seventh shaft 62 and the second shaft 48 is greater than the distance between the fifth shaft 58 and the second shaft 48, and the distance between the sixth shaft 60 and the third shaft 54 is greater than the distance between the fifth shaft 58 and the third shaft 54. Also this arrangement is not imperative and could be varied according to considerations of sizing of the arms 42, 44, 50, 52.

In the practical embodiment, the tank 14 may be articulated to the false frame 12 by means of two identical articulation mechanisms 16 set at a distance from one another in a transverse direction.

The articulation mechanism 16 described above enables the tank 14 to turn about an axis of rotation 66 without having mechanical structures in the proximity of the axis of rotation 66.

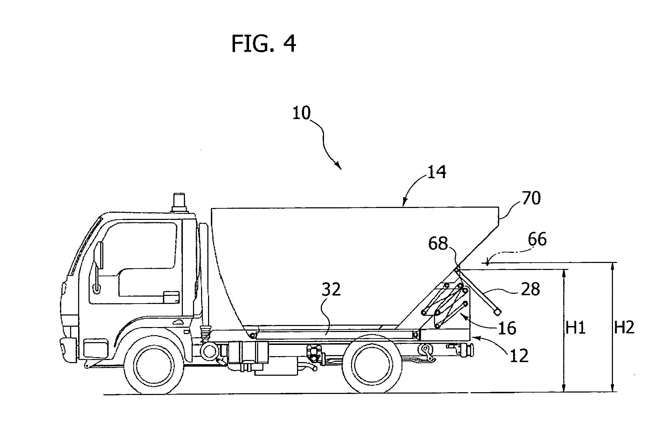

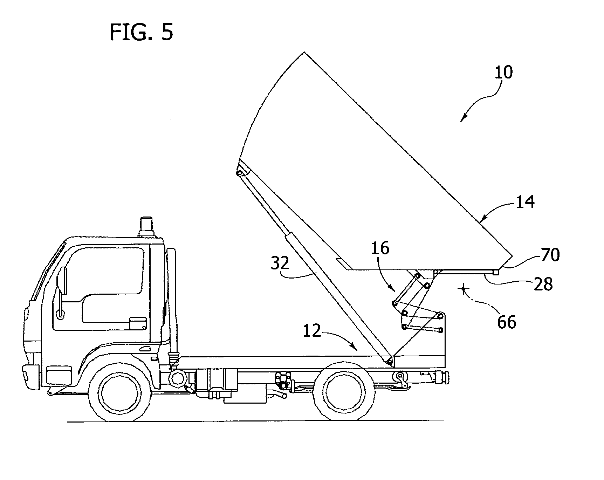

Figures 4, 5 and 6 illustrate a vehicle provided with equipment 10 according to the present invention, respectively in the loading position, during an intermediate step of unloading, and in the unloading position. As may be seen in said figures, in the loading position the side 28 is open. In this position, the tank 14 has a loading edge 68 at a height from the ground H1 for example in the region of 1200 mm.

To carry out unloading of the tank 14, the side is closed. The extension of the cylinder 32 brings about lifting of the tank 14. The tank turns about the axis of rotation 66, which is located in a position fixed with respect to the vehicle at a height from the ground H2 of approximately 1600 mm. The height H2 is greater than the height from the ground of the first shaft 46 and of the second shaft 48.

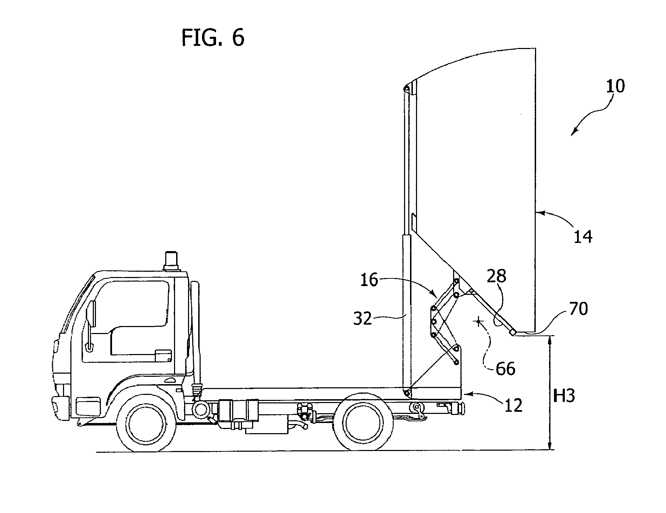

In the position of maximum lifting of the tank 14 (Figure 6) the tank 14 has an unloading edge 70 that is located at a height from the ground H3, for example in the region of approximately 1500 mm. This height of the unloading edge 70 enables unloading of the refuse into large-sized bins to be carried out easily.

The solution according to the present invention hence enables lowering of the loading edge at a height from the ground of approximately 1200 mm, which facilitates manual loading of the refuse considerably. This is possible thanks to the fact that the openable side 28 is of large dimensions. In fact, the fact that the axis of rotation 66 of the tank is set at a distance from the tank and that mechanical structures (such as a hinge) are not provided in the proximity of the axis of rotation 66 enables lowering of the axis of articulation of the side 28 considerably as compared to a case where the tank 14 is articulated to the false frame by means of a hinge.

Even though the loading edge 68 is low, the rotation of the tank 14 occurs about an axis 66 set at a height from the ground substantially equal to that of equipment of a conventional type, in which the tank is articulated to the false frame by means of a hinge. Consequently, it is possible to carry out unloading of the tank 14 into large-sized bins easily.

The articulation mechanism 16 according to the present invention could also be used in combination with a tank without an openable side.

## Claims

1. Equipment for collecting refuse, comprising a false frame (12), a tank (14) articulated to the false frame (12) and at least one lifting cylinder (32), designed to govern a movement of the tank (14) between a loading position and an unloading position, said equipment **characterized in that** the tank (14) is articulated to the false frame (12) by means of an articulation mechanism (16) comprising a first articulated quadrilateral (38) and a second articulated quadrilateral (40), wherein the first articulated quadrilateral (38) comprises a first arm (42) and a second arm (44), which are articulated to the false frame (12) about a first shaft (46) and a second shaft (48), respectively, the second articulated quadrilateral (40) comprises a third arm (50) and a fourth arm (52), which are articulated to the tank (14) about a third shaft (54) and a fourth shaft (56), respectively, wherein the third arm (50) is articulated to the second arm (44) and to the first arm (42) about a fifth shaft (58) and a sixth shaft (60), respectively, and wherein the fourth arm (52) is articulated to the second arm (44) about a seventh shaft (62).

2. The equipment according to Claim 1, **characterized in that** the tank (14) has an openable side (28) articulated to a rear wall (18).

3. The equipment according to Claim 1, **characterized in that** said tank (14), during movement from the loading position to the unloading position, turns about an axis of rotation (66) set at a height (H2) with respect to the ground greater than the height with respect to the ground of said first and second shafts (46, 48).

4. The equipment according to Claim 1, **characterized in that** the distance between said seventh shaft (62) and said second shaft (48) is greater than the distance between said fifth shaft (58) and said third shaft (48).

5. The equipment according to Claim 1, **characterized in that** the distance between said sixth shaft (60) and said third shaft (54) is greater than the distance between said fifth shaft (58) and said third shaft (54).
